(19) Europäisches Patentamt
European Patent Office
Office européen des brevets

(11) **EP 4 618 460 A1**

(12) **EUROPEAN PATENT APPLICATION**
published in accordance with Art. 153(4) EPC

(43) Date of publication:
**17.09.2025   Bulletin 2025/38**

(21) Application number: **22964898.5**

(22) Date of filing: **11.11.2022**

(51) International Patent Classification (IPC):
**H04L 5/00** (2006.01)

(52) Cooperative Patent Classification (CPC):
**H04L 1/1812; H04L 1/1829; H04L 1/1867;**
**H04L 5/00; H04W 8/24; H04W 72/0446;**
**H04W 72/21; H04W 72/51**

(86) International application number:
**PCT/CN2022/131562**

(87) International publication number:
**WO 2024/098430 (16.05.2024 Gazette 2024/20)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Beijing Xiaomi Mobile Software Co.,**
**Ltd.**
**Beijing 100085 (CN)**

(72) Inventors:
• **MU, Qin**
  **Beijing 100085 (CN)**
• **QIAO, Xuemei**
  **Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **PROCESSING DELAY DETERMINATION METHOD, AND APPARATUS, DEVICE AND STORAGE MEDIUM**

(57)   The present disclosure belongs to the technical field of communications. Provided are a processing delay determination method, and an apparatus, a device and a storage medium. The method comprises: a network-side device acquiring capability information of a UE; after the capability information of the UE indicates that the UE is a first-type UE, using a first delay as a decoding delay of the UE; and determining a processing delay of the UE according to the first delay. Therefore, by means of the method provided in the present disclosure, a network-side device indicates rational slot resources on the basis of a determined processing delay of a UE, thereby avoiding the situation where "slot resources of an eRedCap UE that are indicated by the network-side device are irrational", and thus enabling the eRedCap UE to normally perform uplink transmission.

FIG. 2

## Description

## FIELD

The present disclosure relates to the field of communication technology, and in particular to a method/apparatus/device for determining a processing delay and a storage medium.

## BACKGROUND

In a communication system, a User Equipment (UE) needs to undergo a processing delay after an end of the transmission of a last symbol in a Physical Downlink Shared Channel (PDSCH) before it can perform a Hybrid Automatic Repeat request-ACKnowledgement (HARQ-ACK) feedback to a network-side device based on a slot resource indicated by the network-side device for the HARQ-ACK feedback. The processing delay includes a decoding delay of PDSCH and a preparation delay of Physical Uplink Control Channel (PUCCH). Based on this, decoding time of the PDSCH and preparation time of PUCCH of a terminal device need to be taken into account when the network-side device performs the indication of the slot resource for the HARQ-ACK feedback.

However, different types of terminal devices correspond to different decoding delays and preparation delays. A baseband processing capability of an enhance Reduced Capability (eRedCap) UE is only 5 MHz. When the eRedCap UE successfully receives a PDSCH (e.g., broadcast PDSCH) more than 5 MHz, the eRedCap UE selects the data of 5 MHZ for decoding. The eRedCap UE will select the data of 5MHz for decoding, and if it cannot decode successfully, it will select the data of another 5MHz and the previous data for combining and then for decoding again until it decodes successfully. Thus, the eRedCap UE may perform multiple HARQ combining decoding after receiving the PDSCH, resulting in the network-side device not being able to determine the processing delay of the eRedCap UE, such that the slot resource indicated by the network-side device for the eRedCap UE may be unreasonable, and thus the eRedCap UE may not perform the HARQ-ACK feedback normally. Therefore, there is an urgent need for a method for determining a processing delay of an eRedCap UE.

## SUMMARY

The method/apparatus/device for determining a processing delay and a storage medium are used to determine a processing delay of an eRedCap UE.

In a first aspect, embodiments of the present disclosure provide a method for determining a processing delay, which is performed by a network-side device and includes:

   obtaining capability information of a user equipment (UE);

in a case where the capability information of the UE indicates that the UE is a first type UE, using a first delay as a decoding delay of the UE; and determining the processing delay of the UE according to the first delay.

In the method for determining the processing delay provided by the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

In a second aspect, embodiments of the present disclosure provide a method for determining a processing delay, which is performed by a network-side device and includes:
configuring a first uplink slot resource and a second uplink slot resource for the UE, in which the second uplink slot resource is later than the first uplink slot resource.

In a third aspect, embodiments of the present disclosure provide a method for determining a processing delay, which is performed by a UE and includes:
reporting capability information of the UE to a network-side device.

In a fourth aspect, embodiments of the present disclosure provide a method for determining a processing delay, which is performed by a UE and includes:
performing an uplink transmission based on a first uplink slot resource or a second uplink slot resource configured by a network-side device, in which the second uplink slot resource is later than the first uplink slot resource.

In a fifth aspect, embodiments of the present disclosure provide a communication device, which is configured in the network-side device and includes:

   an obtaining module configured to obtain capability information of a user equipment (UE);
   a processing module configured to, in a case where the capability information of the UE indicates that the UE is a first type UE, use a first delay as a decoding delay of the UE; and
   a determining module configured to determine the processing delay of the UE according to the first delay.

In a sixth aspect, embodiments of the present disclosure provide a communication device, which is configured in the network-side device and includes:
a configuring module configured to configure a first uplink slot resource and a second uplink slot resource for the UE, in which the second uplink slot resource is later than the first uplink slot resource.

In a seventh aspect, embodiments of the present disclosure provide a communication device, which is configured in the UE and includes:
a reporting module configured to report capability information of the UE to a network -side device.

In an eighth aspect, embodiments of the present disclosure provide a communication device, which is configured in the UE and includes:
a transmission module configured to perform an uplink transmission based on a first uplink slot resource or a second uplink slot resource configured by a network-side device, in which the second uplink slot resource is later than the first uplink slot resource.

In a ninth aspect, embodiments of the present disclosure provide a communication device includes a processor that performs the method of any of the first aspect to the second aspect when the processor invokes a computer program in a memory.

In a tenth aspect, embodiments of the present disclosure provide a communication device includes a processor that performs the method of any of the third aspect to the fourth aspect when the processor invokes a computer program in a memory.

In an eleventh aspect, embodiments of the present disclosure provide a communication device including a processor and a memory storing a computer program; and the processor executes the computer program stored in the memory to cause the communication device to perform the method in any of the first aspect to the second aspect described above.

In a twelfth aspect, embodiments of the present disclosure provide a communication device including a processor and a memory storing a computer program; and the processor executes the computer program stored in the memory to cause the communication device to perform the method in any of the third aspect to the fourth aspect described above.

In a thirteenth aspect, embodiments of the present disclosure provide a communication device including a processor and an interface circuit configured to receive code instructions and transmit the code instructions to the processor, and the processor is configured to run the code instructions to cause the device to perform the method of any of the first aspect to the second aspect described above.

In a fourteenth aspect, embodiments of the present disclosure provide a communication device including a processor and an interface circuit configured to receive code instructions and transmit the code instructions to the processor, and the processor is configured to run the code instructions to cause the device to perform the method of any of the third aspect to the fourth aspect described above.

In a fifteenth aspect, embodiments of the present disclosure provide a communication system. The system includes a communication device in the third aspect and a communication device in the fourth aspect, or, the system includes a communication device in the tenth aspect and a communication device in the eleventh aspect, or, the system includes a communication device in the twelfth aspect and a communication device in the thirteenth aspect, or, the system includes a communication device in the fourteenth aspect and the communication device in the fifteenth aspect.

In a sixteenth aspect, embodiments of the present disclosure provide a computer-readable storage medium configured to store instructions for use by the network device to cause the terminal device to perform the method in any of the first aspect to the fourth aspect when the instructions are executed.

In a seventeenth aspect, the present disclosure further provides a computer program product including a computer program that, when run on a computer, causes the computer to perform the method in any of the first aspect to the fourth aspect described above.

In an eighteenth aspect, the present disclosure provides a chip system including at least one processor and an interface configured to support the network device to implement the functions involved in the method in any of the first aspect to the fourth aspect, for example, determining or processing at least one of the data and information involved in the method described above. In a possible design, the chip system further includes a memory, and the memory is configured to store a computer program and data necessary for the source and secondary nodes. The chip system may be composed of a chip or may include a chip and other discrete devices.

In a nineteenth aspect, the present disclosure provides a computer program that, when run on a computer, causes the computer to perform the method in any of the first aspect to the fourth aspect described above.

**BRIEF DESCRIPTION OF THE DRAWINGS**

These and other aspects and advantages of embodiments of the present disclosure will become apparent and more readily appreciated from the following descriptions made with reference to the drawings, in which:

FIG. 1 is a schematic diagram of an architecture of a communication system provided by an embodiment of the present disclosure;
FIG. 2 is a flow chart of a method for determining a processing delay provided by another embodiment of the present disclosure;
FIG. 3 is a flow chart of a method for determining a processing delay provided by yet another embodiment of the present disclosure;
FIG. 4 is a flow chart of a method for determining a processing delay provided by still another embodiment of the present disclosure;

FIG. 5 is a flow chart of a method for determining a processing delay provided by another embodiment of the present disclosure;

FIG. 6 is a flow chart of a method for determining a processing delay provided by yet another embodiment of the present disclosure;

FIG. 7 is a flow chart of a method for determining a processing delay provided by still another embodiment of the present disclosure;

FIG. 8 is a flow chart of a method for determining a processing delay provided by an embodiment of the present disclosure;

FIG. 9 is a flow chart of a method for determining a processing delay provided by another embodiment of the present disclosure;

FIG. 10 is a flow chart of a method for determining a processing delay provided by yet another embodiment of the present disclosure;

FIG. 11 is a flow chart of a method for determining a processing delay provided by still another embodiment of the present disclosure;

FIG. 12 is a schematic block diagram of a communication device provided by an embodiment of the present disclosure;

FIG. 13 is a schematic block diagram of a communication device provided by an embodiment of the present disclosure;

FIG. 14 is a schematic block diagram of a communication device provided by an embodiment of the present disclosure;

FIG. 15 is a schematic block diagram of a communication device provided by an embodiment of the present disclosure;

FIG. 16 is a block diagram of a user equipment provided by an embodiment of the present disclosure; and

FIG. 17 is a block diagram of a network side device provided by an embodiment of the present disclosure.

**DETAILED DESCRIPTION**

Exemplary embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the exemplary embodiments do not represent all implementations consistent with embodiments of the present disclosure. On the contrary, they are merely examples of a device and a method consistent with some aspects of embodiments of the present disclosure, as elaborated in the appended claims.

The terms used in embodiments of the present disclosure are only for purpose of description of particular embodiments, and are not intended to limit embodiments of the present disclosure. The singular form "a", "the" and "this" used in embodiments of the present disclosure and the appended claims is also intended to include the plural form, unless other meanings are explicitly expressed in the context. It should be understood that, the term "and/or" used herein refers to include any or all of the possible combinations of one or a plurality of listed related items.

It should be understood that, although the terms "first", "second", "third" may be employed by embodiments of the present disclosure to describe various information, these information should not limited by these terms. These terms are only used to distinguish the information of the same type from each other. For example, a first information may be referred to as a second information without departing from the scope of embodiments of the present disclosure, and similarly, the second information may also be referred to as the first information. Depending on the context, the word "if" used herein may be interpreted as "when...", "upon..." or "in response to determination".

Embodiments of the present disclosure will be described in detail and examples of the embodiments will be illustrated in the drawings, where same or similar reference numerals are used to indicate same or similar elements. The embodiments described herein with reference to drawings are explanatory, illustrative, and used to generally understand the present disclosure. The embodiments shall not be construed to limit the present disclosure.

For ease of understanding, the terms involved in the present application are first introduced.

1. Physical downlink shared channel (PDSCH)

A PDSCH is used to carry data from a Downlink Shared Channel (DL-SCH).

2. Physical uplink control channel (PDCCH)

A PUCCH is used to carry Hybrid Automatic Repeat reQuest (HARQ) information such as Acknowledgement (ACK)/Negative Acknowledgement (NACK), Scheduling Request, Channel Quality Indicator and so on.

The various network elements/functions involved in embodiments of the present disclosure may be either a stand-alone hardware device or a function implemented by computer code within a hardware device, which is not limited in embodiments of the present disclosure.

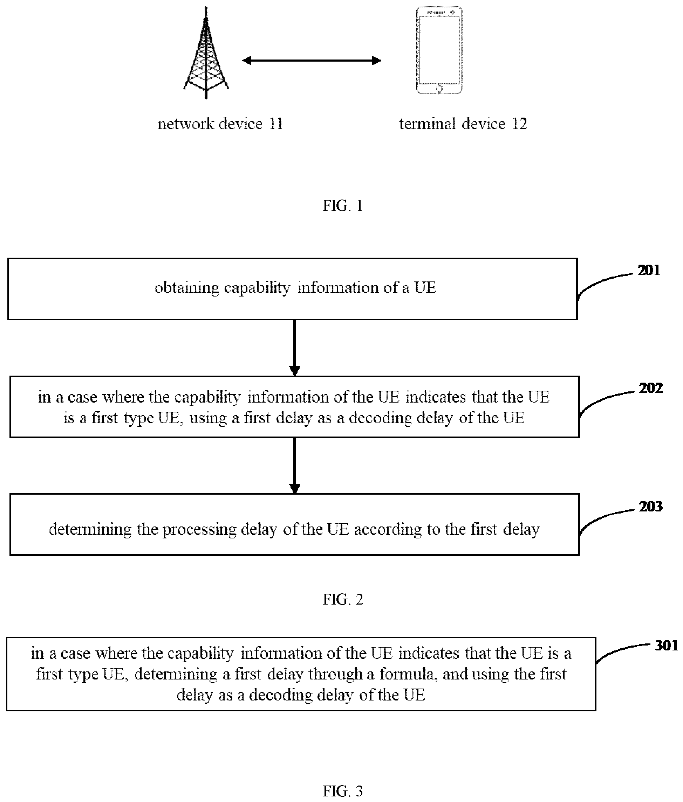

Referring to FIG. 1, FIG. 1 is a schematic diagram of an architecture of a communication system provided by an embodiment of the present application. The communication system may include, but is not limited to, a network device and a terminal device, and the number and form of the devices shown in FIG. 1 are for illustrative purposes only and do not constitute a limitation of the embodiments of the present application, which may include two or more network devices and two or more terminal devices in practical applications. For example, the communication system illustrated in FIG. 1 includes one first network device 11, and one terminal device 12.

It should be noted that the technical solutions of the embodiments of the present application can be applied to various communication systems. Examples include long term evolution (LTE) systems, fifth generation (5G) mobile communication systems, 5G new radio (NR) systems, or other future new mobile communication systems.

The network device 11 in embodiments of the present disclosure is an entity on the network side used to transmit or receive signals. For example, the network device 11 may be an evolved NodeB (eNB), a Transmission Reception Point (TRP), a Next Generation NodeB (gNB) in an NR system, and a base station in other future mobile communication systems, or an access point in a Wireless Fidelity (WiFi) system, among others. The embodiments of the present disclosure do not limit the specific technology and the specific device form used for the network device. The network device provided by embodiments of the present application may be composed of a Centralized Unit (CU) and a Distributed Unit (DU), in which the CU may also be referred to as a Control Unit, and the use of the CU-DU structure may split the protocol layer of the network device, such as a base station. Some of the protocol layer functions are placed in the CU for centralized control, and some or all of the remaining protocol layer functions are distributed in the DU, which is centrally controlled by the CU.

The terminal device 12 in embodiments of the present disclosure is an entity on the user side used to receive or transmit signals, such as a mobile phone. The terminal device can also be referred to as a terminal, user equipment (UE), mobile station (MS), mobile terminal (MT) and so on. The terminal device may be a vehicle with communication function, a smart vehicle, a mobile phone, a wearable device, a tablet computer (Pad), a computer with wireless transceiving function, a virtual reality (VR) terminal device, an augmented reality (AR) terminal device, a wireless terminal device for industrial control, a wireless terminal device for self-driving, a wireless terminal device for remote medical surgery, a wireless terminal device for smart grid, a wireless terminal device for transportation security, a wireless terminal device for smart city, a wireless terminal device for smart home, and so on. The embodiments of the present application do not limit the specific technology and the specific device form used for the terminal device.

It is to be understood that the communication system described in embodiments of the present disclosure is intended to more clearly illustrate the technical solutions of embodiments of the present disclosure and does not constitute a limitation of the technical solutions provided by embodiments of the present disclosure, and a person of ordinary skill in the art may know that, with the evolution of the system architecture and the emergence of new busine ss scenarios, the technical solutions provided by embodiments of the present disclosure are equally applicable to similar technical problems.

The method/apparatus/device for determining a processing delay and the storage medium provided by embodiments of the present disclosure are described in detail below with reference to the accompanying drawings.

FIG. 2 is a flow chart of a method for determining a processing delay provided by an embodiment of the present disclosure, the method is performed by a network-side device, and as illustrated in FIG. 2, the method for determining the processing delay may include following steps.

In step 201: capability information of a UE is obtained.

In an embodiment of the present disclosure, the capability information of the UE may include at least one of:

receiving the capability information reported by the UE through a separate initial uplink bandwidth part (UL BWP) or a separate physical random access channel (PRACH) resource;
receiving the capability information reported by the UE through MSG3; or
receiving the capability information reported by the UE through a radio resource control (RRC) signaling.

Specifically, in an embodiment of the present disclosure, a network-side device may obtain the capability information of the UE in a random access channel (RACH) through an early indication mechanism. Specifically, in an embodiment of the present disclosure, the capability information reported by the UE may be received through the separate initial UL BWP or the separate PRACH resource.

Furthermore, in an embodiment of the present disclosure, a method of the network-side device receiving the capability information reported by the UE through the MSG3 may include: receiving the capability information reported by the UE through an indication field carried in the MSG3. In another embodiment of the present disclosure, a method of the network-side device receiving the capability information reported by the UE through the MSG3 may include: receiving the capability information reported by the UE through a new common control channel (CCCH).

Further, in an embodiment of the present disclosure, the capability information of the UE may include at least one of:

processing capability information of the UE;
a terminal type of the UE;

a bandwidth supported by the UE;

a size of a post-FFT buffer of the UE; or

a HARQ combining capability of the UE.

In an embodiment of the present disclosure, the capability information of the UE may be used to indicate a processing capacity of the UE for the PDSCH channel carrying system information block 1 (SIB1), other system information (OSI), paging, Random access response (RAR), MSGA, and MSG4. Furthermore, in another embodiment of the present disclosure, the capability information of the UE may be used to indicate the processing capacity of the UE for all PDSCH channels.

Furthermore, in an embodiment of the present disclosure, the terminal type of the UE may include at least one of a legacy UE or an eRedCap UE. In an embodiment of the present disclosure, the bandwidth supported by the UE is a bandwidth (e.g., 5 MHz) at which the UE processes data. In an embodiment of the present disclosure, the processing capability information of the UE may indicate a newly defined processing capability.

It should be noted that, in an embodiment of the present disclosure, the network-side device may actively obtain the capability information of the UE, such as obtaining the capability information of the UE through the early indication mechanism during the RACH process. Furthermore, in another embodiment of the present disclosure, the network-side device may obtain the capability information of the UE after indicating that the UE needs to report the capability information of the UE. This part will be described in detail in subsequent embodiments.

In step 202: in a case where the capability information of the UE indicates that the UE is a first type UE, a first delay is used as a decoding delay of the UE.

In an embodiment of the present disclosure, the network-side device may determine a type corresponding to the UE according to the capability information of the UE obtained.

Specifically, in an embodiment of the present disclosure, the network-side device may explicitly or implicitly determine the type corresponding to the UE according to the capability information of the UE obtained. Specifically, in an embodiment of the present disclosure, if the capability information of the UE obtained by the network-side device includes the terminal type of the UE for the UE, the network-side device explicitly determine the type corresponding to the UE according to the terminal type of the UE. Furthermore, in another embodiment of the present disclosure, if the capability information of the UE obtained by the network-side device includes the processing capability information of the UE or the bandwidth supported by the UE, the network-side device implicitly determine the type corresponding to the UE according to the processing capability information of the UE or the bandwidth supported by the UE.

Furthermore, in an embodiment of the present disclosure, the first type UE may be an eRedCap UE.

Furthermore, in an embodiment of the present disclosure, if the UE is determined to be a first type UE, the first delay is determined and the first delay is used as the decoding delay of the UE. Details on determining the first delay will be described in subsequent embodiments.

In step 203: the processing delay of the UE is determined according to the first delay.

In an embodiment of the present disclosure, the network-side device may determine the processing delay of the UE in different processes according to the first delay.

Specifically, in an embodiment of the present disclosure, the network-side device may use a sum of the first delay and a first preset value as a minimum interval between receiving of MSG2 and sending of a new MSG1 by the UE (i.e., the processing delay).

By way of example, in an embodiment of the present disclosure, assuming that the UE receives MSG2 at a moment of T1 and sends a new MSG1 at a moment of T2, the minimum time interval from T1 to T2 is the sum of the first delay and the first preset value.

Furthermore, in another embodiment of the present disclosure, the network-side device may obtain a preparation delay of the UE, and use a sum of the first delay, the preparation delay, and a second preset value as a minimum time interval between receiving of MSG2 and sending of MSG3 by the UE (i.e., the processing delay).

By way of example, in an embodiment of the present disclosure, assuming that the UE receives MSG2 at a moment of T3 and sends MSG3 at a moment of T4, the minimum time interval from T3 to T4 is the sum of the first delay, the preparation delay, and the second preset value.

Further, in yet another embodiment of the present disclosure, the network-side device may use a sum of the first delay and a second preset value as a minimum time interval between receiving of MSG4 and sending of a HARQ-ACK feedback by the UE.

By way of example, in an embodiment of the present disclosure, assuming that the UE receives MSG4 at a moment of T5 and sends the HARQ-ACK feedback at a moment of T6, the minimum time interval from T5 to T6 is the sum of the first delay and the second preset value.

In another embodiment of the present disclosure, the network-side device may use a sum of the first delay and the first preset value as a minimum interval between receiving of PDSCH and sending of hybrid automatic repeat request (HARQ) feedback by the UE.

By way of example, in an embodiment of the present disclosure, assuming that the UE receives PDSCH at a moment of T7 and sends the HARQ-ACK at a moment of T8, the minimum time interval from T7 to T8 is the sum of the first delay and the first preset value.

Furthermore, in an embodiment of the present disclosure, the first preset value may set to be 0.75. Furthermore, in another embodiment of the present disclosure, the second preset value may set to be 0.5.

Further, in an embodiment of the present disclosure, after determining the processing delay of the UE, the network-side device indicates a reasonable slot resource according to the processing delay of the UE, avoiding the situation where "the slot resource for the eRedCap UE indicated by the network-side device is unreasonable", and thus enabling the eRedCap UE to normally perform uplink transmission.

In summary, in the method for determining the processing delay provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

FIG. 3 is a flow chart of a method for determining a processing delay provided by an embodiment of the present disclosure, the method is performed by a network-side device, and as illustrated in FIG. 3, the method for determining the processing delay may include following steps.

In step 301: in a case where the capability information of the UE indicates that the UE is a first type UE, a first delay is determined through a formula, and the first delay is used as a decoding delay of the UE.

In an embodiment of the present disclosure, the first delay may be determined through any of following formulas:

$$NT,1\_new=NT,1+delta;$$

or

$$NT,1\_new=m*NT,1,$$

where NT,1_new is the first delay, NT,1 is the second delay, and delta or m is a preset value.

Furthermore, in an embodiment of the present disclosure, delta or m may be specified by a protocol. Specifically, in an embodiment of the present disclosure, the protocol specifies that delta or m has different values for different numbers of HARQ combining. In an embodiment of the present disclosure, the network-side device may determine a value of delta or m based on a protocol specification, and substitute the value of delta or m into the above corresponding formula to determine the first delay.

Further, in another embodiment of the present disclosure, delta or m may be configured by the network-side device.

In an embodiment of the present disclosure, the second delay may be a one-time decoding delay determined based on the legacy UE in the related art, and it can be derived from the above formula that the first delay is an extension of the decoding time based on the second time delay to enable the determined first delay to be suitable for the process of multiple HARQ combining decoding performed by the eRedCap UE such that the network-side device subsequently determines the processing delay suitable for the eRedCap UE based on the first delay.

In addition, other details about the present embodiment can be described with reference to the above embodiments.

In summary, in the method for determining the processing delay provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

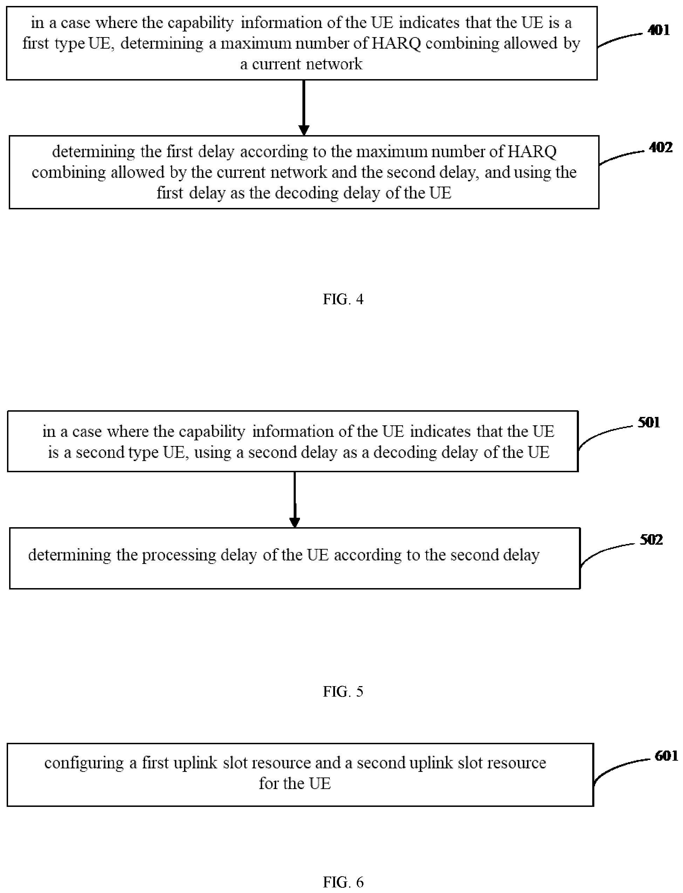

FIG. 4 is a flow chart of a method for determining a processing delay provided by an embodiment of the present disclosure, the method is performed by a network device, and as illustrated in FIG. 4, the method for determining the processing delay may include following steps.

In step 401: in a case where the capability information of the UE indicates that the UE is a first type UE, a maximum number of HARQ combining allowed by a current network is determined.

In an embodiment of the present disclosure, the network-side device may determine the maximum number of HARQ combining allowed based on a current network condition.

In step 402: the first delay is determined according to the maximum number of HARQ combining allowed by the current network and the second delay, and the first delay is used as the decoding delay of the UE.

In an embodiment of the present disclosure, the second delay may be a one-time decoding delay determined based on a capability of the Legacy UE in the related art, then the method of determining the first delay according to the maximum number of HARQ combining allowed by the current network and the second delay may include: first delay = maximum number of HARQ combining allowed x second delay. In an embodiment of the present disclosure, the first delay determined by the above method is the longest decoding delay capable of being configured by the current network-side device to the eRedCap UE, ensuring that the eRedCap UE can perform multiple HARQ combining decoding, which ensures that the eRedCap UE can subsequently perform the uplink transmission normally.

In addition, other details about the present embodiment can be described with reference to the above embodiments.

In summary, in the method for determining the processing delay provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

FIG. 5 is a flow chart of a method for determining a processing delay provided by an embodiment of the present disclosure, the method is performed by a network device, and as illustrated in FIG. 5, the method for determining the processing delay may include following steps.

In step 501: in a case where the capability information of the UE indicates that the UE is a second type UE, a second delay is used as a decoding delay of the UE.

In an embodiment of the present disclosure, the second delay is less than the first delay.

Furthermore, in an embodiment of the present disclosure, if the capability information of the UE is the second type UE, the UE does not need to perform multiple HARQ combining decoding, and in view of this, the second delay may be a one-time decoding delay determined based on a legacy UE in the related art.

In an embodiment of the present disclosure, the second type UE may be a legacy UE.

In step 502: the processing delay of the UE is determined according to the second delay.

In an embodiment of the present disclosure, the network-side device may determine the processing delay of the UE in different processes according to the second delay.

Specifically, in an embodiment of the present disclosure, the network-side device may use a sum of the second delay and a first preset value as a minimum interval between receiving of MSG2 and sending of a new MSG1 by the UE (i.e., the processing delay).

By way of example, in an embodiment of the present disclosure, assuming that the UE receives MSG2 at a moment of T9 and sends a new MSG1 at a moment of T10, the minimum time interval from T9 to T10 is the sum of the second delay and the first preset value.

Furthermore, in another embodiment of the present disclosure, the network-side device may obtain a preparation delay of the UE, and use a sum of the second delay, the preparation delay, and a second preset value as a minimum time interval between receiving of MSG2 and sending of MSG3 by the UE (i.e., the processing delay).

By way of example, in an embodiment of the present disclosure, assuming that the UE receives MSG2 at a moment of T11 and sends MSG3 at a moment of T12, the minimum time interval from T11 to T12 is the sum of the second delay, the preparation delay, and the second preset value.

Further, in yet another embodiment of the present disclosure, the network-side device may use a sum of the second delay and a second preset value as a minimum time interval between receiving of MSG4 and sending of a HARQ-ACK feedback by the UE.

By way of example, in an embodiment of the present disclosure, assuming that the UE receives MSG4 at a moment of T13 and sends the HARQ-ACK at a moment of T14, the minimum time interval from T13 to T14 is the sum of the second delay and the second preset value.

In another embodiment of the present disclosure, the network-side device may use a sum of the second delay and the first preset value as a minimum interval between receiving of PDSCH and sending of a HARQ feedback by the UE.

By way of example, in an embodiment of the present disclosure, assuming that the UE receives PDSCH at a moment of T15 and sends the HARQ-ACK feedback at a moment of T16, the minimum time interval from T15 to T16 is the sum of the second delay and the first preset value.

Furthermore, in an embodiment of the present disclosure, the first preset value may set to be 0.75. Furthermore, in another embodiment of the present disclosure, the second preset value may set to be 0.5.

In addition, other details about the present embodiment can be described with reference to the above embodiments.

In summary, in the method for determining the processing delay provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

FIG. 6 is a flow chart of a method for determining a processing delay provided by an embodiment of the present disclosure, the method is performed by a network-side device, and as illustrated in FIG. 6, the method for determining the processing delay may include following steps.

In step 601: a first uplink slot resource and a second uplink slot resource are configured for the UE.

In an embodiment of the present disclosure, the second uplink slot resource is later than the first uplink slot resource.

In an embodiment of the present disclosure, the network-side device performs step 601 on the premise that the network-side device does not obtain the capability information of the UE, i.e., the network-side device is unable to determine whether the type of the current UE is the first type UE; and based on this, the network-side device configures the first uplink slot resource and the second uplink slot resource for all UEs, and the second uplink slot resource is later than the first uplink slot resource, so that the UE may select a suitable slot resource from the first uplink slot resource and the second uplink slot resource according to its own processing capability.

Specifically, in an embodiment of the present disclosure, in a case where the type of the UE is not the first type UE, the UE does not need to perform multiple HARQ combining decoding, the processing delay required is shorter, and then the UE may select the first uplink slot resource for uplink transmission; and in a case where the type of the UE is the first type UE, the UE performs multiple HARQ combining decoding, the processing delay required is longer, and then the UE may select the second uplink slot resource for uplink transmission. By means of the method of the step 701, the UE may select a suitable slot resource for the uplink transmission, avoiding the situation where "the slot resource for the eRedCap UE indicated by the network-side device is unreasonable", and thus enabling the eRedCap UE to normally perform uplink transmission.

In addition, other details about the present embodiment can be described with reference to the above embodiments.

In summary, in the method for determining the processing delay provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

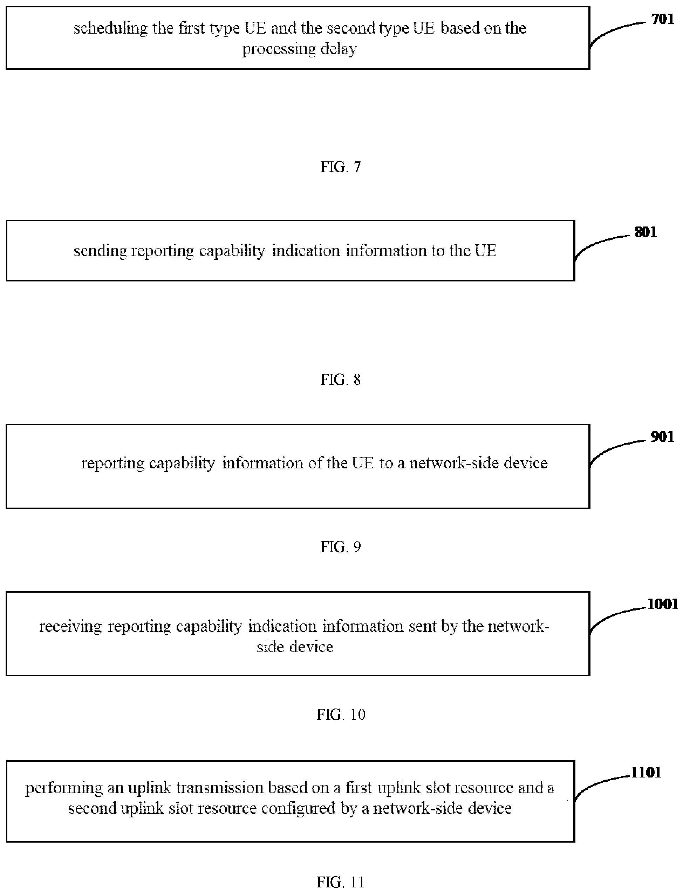

FIG. 7 is a flow chart of a method for determining a processing delay provided by an embodiment of the present disclosure, the method is performed by a network-side device, and as illustrated in FIG. 7, the method for determining the processing delay may include following steps.

In step 701: the first type UE and the second type UE are scheduled based on the processing delay.

In an embodiment of the present disclosure, in some scenarios, even the processing delay determined based on the capability of the first type UE (e.g., an eRedCap UE) may likewise apply to the second type UE (a legacy UE). Based on this, the network side device may allocate a reasonable slot resource for the UE based on the processing delay regardless of whether the UE is the first type UE or the second type UE, and thus the UE performs the uplink transmission based on the allocated slot resource; and the network-side device schedules the slot resource based on the processing delay, enabling the eRedCap UE to perform the uplink transmission normally, i.e., the scheduling of the first type terminal and also the scheduling of the second type terminal may be realized within the processing delay.

In addition, other details about the present embodiment can be described with reference to the above embodiments.

In summary, in the method for determining the processing delay provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

FIG. 8 is a flow chart of a method for determining a processing delay provided by an embodiment of the present disclosure, the method is performed by a network device, and as illustrated in FIG. 8, the method for determining the processing delay may include following steps.

In step 801: reporting capability indication information is sent to the UE.

In an embodiment of the present disclosure, the reporting capability indication information is used to indicate whether the UE needs to report the capability information.

Furthermore, in an embodiment of the present disclosure, the reporting capability indication information may include N bits, where N is a positive integer. By way of example, in an embodiment of the present disclosure, it is assumed that the reporting capability indication information includes 1 bit, when the bit is 1, the reporting capability indication information indicates that the UE needs to report the capability information, and when the bit is 0, the reporting capability indication information indicates that the UE does not need to report the capability information.

Further, in an embodiment of the present disclosure, when the reporting capability indication information indicates that the UE needs to report the capability information, and the network-side device obtains or does not obtain the capability information reported by the UE, the corresponding method for determining the processing delay of the UE is different.

Specifically, in an embodiment of the present disclosure, when the reporting capability indication information indicates that the UE needs to report the capability information, and the network-side device obtains the capability information reported by the UE, the processing delay of the UE may be determined through the embodiments described above.

Furthermore, in an embodiment of the present disclosure, when the reporting capability indication information indicates that the UE needs to report capability information, and the network-side device does not obtain the capability information reported by the UE, i.e., the network-side device is not able to determine whether the current UE is the first type UE; and based on this, the network-side device allocates a reasonable slot resource for the UE through the step 601 or step 701 described above, avoiding the situation where "the slot resource for an eRedCap UE indicated by the network-side device is unreasonable", and thus enabling the eRedCap UE to normally perform the uplink transmission.

In addition, other details about the present embodiment can be described with reference to the above embodiments.

In summary, in the method for determining the processing delay provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

FIG. 9 is a flow chart of a method for determining a processing delay provided by an embodiment of the present disclosure, the method is performed by a UE, and as illustrated in FIG. 9, the method for determining the processing delay may include following steps.

In step 901: capability information of the UE is reported to a network-side device.

In an embodiment of the present disclosure, reporting the capability information of the UE to the network-side device may include at least one of:

reporting the capability information of the UE to the network-side device through a separate initial UL BWP or a separate PRACH resource;
reporting the capability information of the UE to the network-side device through MSG3; or
reporting the capability information of the UE to the network-side device through an RRC signaling.

Furthermore, in an embodiment of the present disclosure, the UE may report the capability information of the UE to the network-side device through the early indication mechanism during the RACH process. Specifically, in an embodiment of the present disclosure, the capability information of the UE may be reported to the network-side device through the separate initial UL BWP or the separate PRACH resource.

Further, in an embodiment of the present disclosure, a method of the UE reporting the capability information of the UE to the network-side device through the MSG3 may include: reporting the capability information of the UE to the network-side device through an indication field carried in the MSG3. In another embodiment of the present disclosure, a method of reporting the capability information through the MSG3 may include:

reporting the capability information of the UE to the network-side device through a new CCCH.

Further, in an embodiment of the present disclosure, the capability information may include at least one of:

processing capability information of the UE;
a terminal type of the UE;
a bandwidth supported by the UE;
a size of a post-FFT buffer of the UE; or
a HARQ combining capability of the UE.

Further, in an embodiment of the present disclosure, the UE may process the PDSCH according to its own processing capability, and upon completion of the processing of the PDSCH, perform the uplink transmission to the network-side device according to the slot resource indicated by the network-side device.

Furthermore, in an embodiment of the present disclosure, after obtaining the capability information of the UE, the network-side device may determine the type of the UE based the capability information of the UE and determine whether the UE is the first type UE based on the type of the UE to determine a corresponding processing delay; and then allocate a reasonable slot resource to the UE according to the processing delay, avoiding the situation where "the slot resource for the eRedCap UE indicated by the network-side device is unreasonable", and thus enabling the eRedCap UE to normally perform uplink transmission.

It should be noted that, in an embodiment of the present disclosure, the UE may actively report the capability information of the UE to the network-side device, such as reporting the capability information of the UE through the early indication mechanism during the RACH process. Furthermore, in another embodiment of the present disclosure, the UE may report the capability information of the UE in a case where the network-side device indicates that the UE needs to report the capability information of the UE. This part will be described in detail in subsequent embodiments.

In addition, other details about the present embodiment can be described with reference to the above embodiments.

In summary, in the method for determining the processing delay provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

FIG. 10 is a flow chart of a method for determining a processing delay provided by an embodiment of the present disclosure, the method is performed by a UE, and as illustrated in FIG. 10, the method for determining the processing delay may include following steps.

In step 1001: reporting capability indication information sent by the network-side device is received.

In an embodiment of the present disclosure, the reporting capability indication information may be used to indicate whether the UE needs to report the capability information.

Furthermore, in an embodiment of the present disclosure, the reporting capability indication information may include N bits, where N is a positive integer. By way of example, in an embodiment of the present disclosure, it is assumed that the reporting capability indication information includes 1 bit, when the bit is 1, the reporting capability indication information indicates that the UE needs to report the capability information, and when the bit is 0, the reporting capability indication information indicates that the UE does not need to report the capability information.

Further, in an embodiment of the present disclosure, when the reporting capability indication information indicates that the UE needs to report the capability information, the UE may report the capability information or not report the capability information.

In addition, other details about the present embodiment can be described with reference to the above embodiments.

In summary, in the method for determining the processing delay provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

FIG. 11 is a flow chart of a method for determining a processing delay provided by an embodiment of the present disclosure, the method is performed by a UE, and as illustrated in FIG. 11, the method for determining the processing delay may include following steps.

In step 1101: an uplink transmission is performed based on a first uplink slot resource and a second uplink slot resource configured by a network-side device.

In an embodiment of the present disclosure, the second uplink slot resource is later than the first uplink slot resource.

Furthermore, in an embodiment of the present disclosure, the UE may select a suitable slot resource from the first uplink slot resource and the second uplink slot resource according to its own type.

Specifically, in an embodiment of the present disclosure, in a case where the type of the UE is the second type UE, the UE does not need to perform multiple HARQ combining decoding, the processing delay required is shorter, and then the UE may select the first uplink slot resource for uplink transmission; and in a case where the type of the UE is the first type UE, the UE does not perform multiple HARQ combining decoding, the processing delay required is longer, and then the UE may select the second uplink slot resource for uplink transmission. By means of the method of the step 1101, the UE may select a suitable slot resource for the uplink transmission, enabling the eRedCap UE to normally perform uplink transmission.

In addition, other details about the present embodiment can be described with reference to the above embodiments.

In summary, in the method for determining the processing delay provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

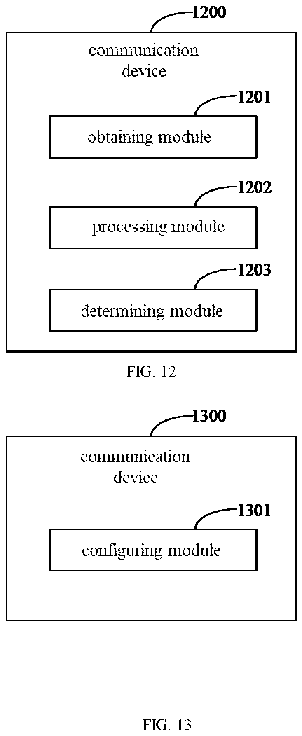

FIG. 12 is a schematic block diagram of a communication device provided by an embodiment of the present disclosure; and as illustrated in FIG. 12, the device includes:

an obtaining module 1201 configured to obtain capability information of a UE;
a processing module 1202 configured to, in a case where the capability information of the UE indicates that the UE is a first type UE, use a first delay as a decoding delay of the UE; and

a determining module 1203 configured to determine the processing delay of the UE according to the first delay.

In summary, in the communication device provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

Optionally, in an embodiment of the present disclosure, the device is further configured to:

in a case where the capability information of the UE indicates that the UE is a second type UE, use a second delay as the decoding delay of the UE, in which the second delay is less than the first delay; and

determine the processing delay of the UE according to the second delay.

Optionally, in an embodiment of the present disclosure, the processing module 1202 is further configured to obtain the first delay through any of following formulas:

$$NT,1\_new=NT,1+delta;$$

or

$$NT,1\_new=m*NT,1,$$

where NT, 1_new is the first delay, NT,1 is the second delay, and delta or m is a preset value. :

Optionally, in an embodiment of the present disclosure, delta or m may be specified by a protocol, or obtained by a configuration of the network-side device.

Optionally, in an embodiment of the present disclosure, the processing module 1202 is further configured to:

determine a maximum number of HARQ combining allowed by a current network; and

determine the first delay according to the maximum number of HARQ combining allowed by the current network and the second delay.

Optionally, in an embodiment of the present disclosure, the determining module 1901 is further configured to:

use a sum of the first delay or the second delay and a first preset value as a minimum interval between receiving of MSG2 and sending of a new MSG1 by the UE;
obtain a preparation delay of the UE, and use a sum of the first delay or the second delay, the preparation delay, and a second preset value as a minimum time interval between receiving of MSG2 and sending of MSG3 by the UE;
use a sum of the first delay or the second delay and a second preset value as a minimum time interval between receiving of MSG4 and sending of a HARQ-ACK feedback by the UE; or
use a sum of the first delay or the second delay and a first preset value as a minimum between receiving of a PDSCH and sending of a HARQ feedback by the UE.

Optionally, in an embodiment of the present disclosure, the obtaining module 1201 is further configured to perform at least one of:

receiving the capability information reported by the UE through a separate initial UL BWP or a separate PRACH resource;
receiving the capability information reported by the UE through MSG3; or
receiving the capability information reported by the UE through an RRC signaling.

Optionally, in an embodiment of the present disclosure, the device is further configured to:
send reporting capability indication information to the UE, in which the reporting capability indication information is used to indicate whether the UE needs to report the capability information.

Optionally, in an embodiment of the present disclosure, the capability information may include at least one of:

processing capability information of the UE;
a terminal type of the UE;
a bandwidth supported by the UE;
a size of a post-FFT buffer of the UE; or
a HARQ combining capability of the UE.

Optionally, in an embodiment of the present disclosure, the device is further configured to schedule the first type UE and the second type UE based on the processing delay.

Optionally, in an embodiment of the present disclosure, the first type UE is an eRedCap UE, and the second type UE is a legacy UE.
FIG. 13 is a schematic block diagram of a communication device provided by an embodiment of the present disclosure; and as illustrated in FIG. 13, the device includes:
a configuring module 1301 configured to configure a first uplink slot resource and a second uplink slot resource for the UE, in which the second uplink slot resource is later than the first uplink slot resource.
In summary, in the communication device provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

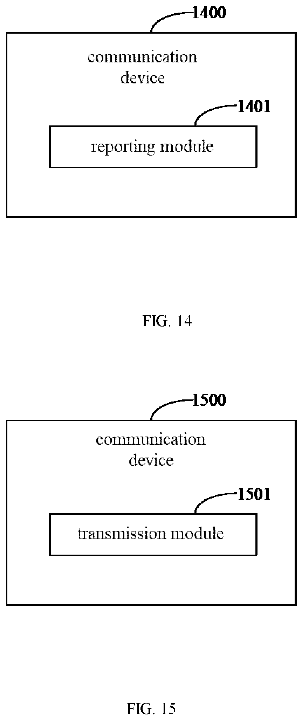

FIG. 14 is a schematic block diagram of a communication device provided by an embodiment of the present disclosure; and as illustrated in FIG. 14, the device includes:
a reporting module 1401 configured to report capability information of the UE to a network-side device.
In summary, in the communication device provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.
Optionally, in an embodiment of the present disclosure, the reporting module 1401 is further configured to perform at least one of:

reporting the capability information of the UE to the network-side device through a separate initial UL BWP or a separate PRACH resource;
reporting the capability information of the UE to the network-side device through MSG3; or
reporting the capability information of the UE to the network-side device through an RRC signaling.

Optionally, in an embodiment of the present disclosure, the device is further configured to:
receive reporting capability indication information sent by the network-side device, in which the reporting capability indication information is used to indicate whether the UE needs to report the capability information.

Optionally, in an embodiment of the present disclosure, the capability information may include at least one of:

processing capability information of the UE;
a terminal type of the UE;
a bandwidth supported by the UE;
a size of a post-FFT buffer of the UE; or
a HARQ combining capability of the UE.

FIG. 15 is a schematic block diagram of a communication device provided by an embodiment of the present disclosure; and as illustrated in FIG. 15, the device includes:
a transmission module configured to perform an uplink transmission based on a first uplink slot resource or a second uplink slot resource configured by a network-side device, in which the second uplink slot resource is later than the first uplink slot resource.

In summary, in the communication device provided by embodiments of the present disclosure, the network-side device will obtain the capability information of the UE; in a case where the capability information of the UE indicates that the UE is a first type UE, use a first delay as a decoding delay of the UE; and determine the processing delay of the UE according to the first delay. Therefore, in the method provided by the present disclosure, after determining that the capability information of the UE obtained indicates that the UE is the first type UE, the network-side device will determine the first delay suitable for the first type UE and determine the processing delay of the UE according to the first delay, and indicate a reasonable slot resource based on the determined processing delay, avoiding the situation where "the slot resource for an eRedCap UE indicated by the network-side device is unreasonable", and thus enabling the UE to normally perform the uplink transmission.

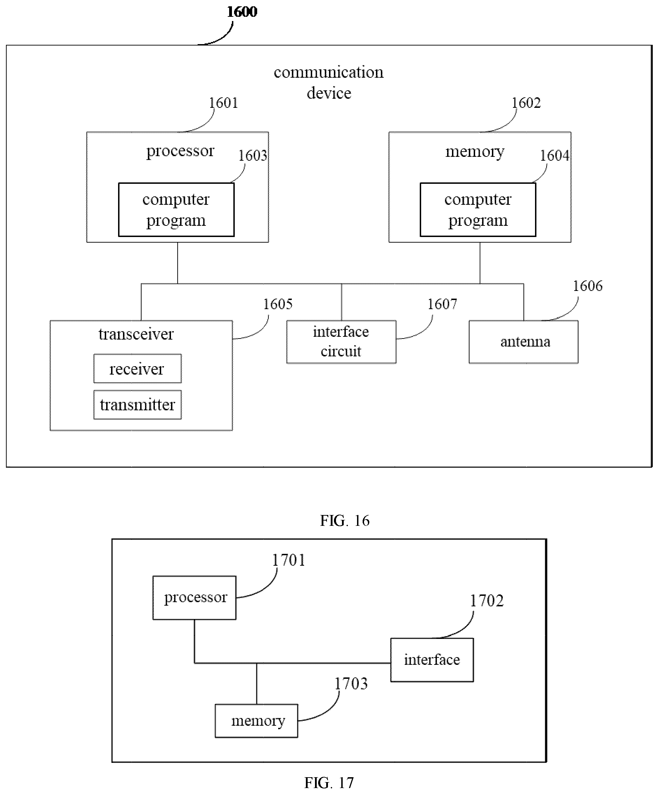

Referring to FIG. 16, FIG. 16 is a block diagram of a communication device 1600 provided by an embodiment of the present disclosure. The communication device 1600 may be a network device, a terminal device, a chip, a chip system, or a processor, etc. that supports the network device to realize the above-described method, or a chip, a chip system, or a processor, etc. that supports the terminal device to realize the above-described method. The device may be configured to realize the methods described in the above method embodiments, and the details may be found in the description of the above method embodiments.

The communication device 1600 may include one or more processors 1601. The processor 1601 may be a general purpose processor or a specialized processor, etc. This may be, for example, a baseband processor or a central processor. The baseband processor may be used to process the communication protocol as well as the communication data, and the central processor may be used to control the communication device (e.g., the base station, the baseband chip, the terminal device, the terminal device chip, the DU or the CU, etc.), execute the computer program, and process the data of the computer program.

Optionally, the communication device 1600 may also include one or more memories 1602, on which a computer program 1604 may be stored, and the processor 1601 executes the computer program 1604 to cause the communication device 1600 to perform the method described in the method embodiment described above. Optionally, data may also be stored in the memory 1602. The communication device 1600 and the memory 1602 may be provided separately or may be integrated together.

Optionally, the communication device 1600 may also include a transceiver 1605, and an antenna 1606. The transceiver 1605 may be referred to as a transceiver unit, a transceiver machine, or a transceiver circuit, etc., and is used to implement the sending and receiving functions. The transceiver 1605 may include a receiver and a transmitter, the receiver may be referred to as a receiving machine or a receiving circuit, etc., for implementing the receiving function, and the transmitter may be referred to as a transmitting machine or a transmitting circuit, etc., for implementing the sending function.

Optionally, the communication device 1600 may also include one or more interface circuits 1607. The interface circuit 1607 is used to receive code instructions and transmit them to the processor 1601. The processor 1601 runs said code instructions to cause the communication device 1600 to perform the method described in the method embodiment above.

The communication device 1600 is a terminal device: the transceiver 1605 is configured to perform steps 301 to 302 in FIG. 3; steps 401 to 402 in FIG. 4; steps 501 to 503 in FIG. 5; steps 601a to 603a in FIG. 6a; and steps 601b to 602b in FIG. 6b. The processor 1601 is configured to perform step 201 in FIG. 2; steps 303 to 304 in FIG. 3; step 403 in FIG. 4; steps 504 and 505 in FIG. 5; step 604a in FIG. 6a; step 603b in FIG. 6b; and steps 701 to 702 in FIG. 7.

The communication device 1600 is a network device: the transceiver 1605 is configured to perform step 1102a in FIG. 11a. The processor 1601 is configured to perform step 801 in FIG. 8; steps 901 to 904 in FIG. 9;

steps 1001 to 1005 in FIG. 10; step 1101a in FIG. 11a; and steps 1101b and 1102b in FIG. 11b.

In an implementation, the processor 1601 may include a transceiver for implementing receiving and transmitting functions. The transceiver may, for example, be a transceiver circuit, or an interface, or an interface circuit. The transceiver circuit, interface or interface circuit used to implement the receiving and transmitting functions may be separate or integrated. The above transceiver circuit, interface or interface circuit may be used for code/data reading and writing, or, the above transceiver circuit, interface or interface circuit may be used for signal transmission or delivery.

In one implementation, the processor 1601 may store a computer program 1603, and the computer program 1603 running on the processor 1601 may cause the communication device 1600 to perform the method described in the method embodiment above. The computer program 1603 may be solidified in the processor 1601, and in this case, the processor 1601 may be implemented by hardware.

In one implementation, the communication device 1600 may include a circuit, and the circuit may realize the function of sending or receiving or communicating in the method embodiment above. The processor and transceiver described in the present application may be implemented on integrated circuits (ICs), analog ICs, radio frequency integrated circuits (RFICs), mixed-signal ICs, application specific integrated circuits (ASICs), printed circuit boards (PCBs), electronic devices, and the like. The processor and transceiver can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal device, but the scope of the communication device described in the present disclosure is not limited thereto, and the structure of the communication device may not be limited by FIG. 16. The communication device may be a stand-alone device or may be part of a larger device. For example the communication device may be:

(1) a stand-alone integrated circuit IC, or chip, or, chip system or subsystem;
(2) a collection having one or more ICs, optionally, the collection of ICs may also include storage components for storing data, computer programs;
(3) ASIC, such as a modem;
(4) a module that can be embedded within other devices;
(5) a receiver, terminal device, smart terminal device, cellular phone, wireless device, handset, mobile unit, in-vehicle device, network device, cloud device, artificial intelligence device, and so on;
(6) other devices.

For the case where the communication device may be a chip or a chip system, see the block schematic diagram of the chip illustrated in FIG. 17. The chip illustrated in FIG. 17 includes a processor 1701 and an interface 1702. The number of processors 1701 may be one or more, and the number of interfaces 1702 may be more than one.

Optionally, the chip further includes a memory 1703, and the memory 1703 is configured to store necessary computer programs and data.

A person skilled in the art may also understand that the various illustrative logical blocks and steps set forth in the embodiments of the present application may be implemented by electronic hardware, computer software, or a combination of both. Whether such a function is realized in hardware or software depends on the specific application and the design requirements of the overall system. A person skilled in the art may, for each particular application, use a variety of functions that can be implemented using various methods, but such implementations should not be construed as being outside the scope of protection of the embodiments of the present application.

The present application also provides a readable storage medium having stored thereon instructions which, when executed by a computer, realize the functions of any of the above method embodiments.

The present application also provides a computer program product which, when executed by a computer, realizes the functions of any of the above method embodiments.

In the above embodiments, this may be accomplished in whole or in part by software, hardware, firmware, or any combination thereof. When implemented using software, it may be implemented in whole or in part as a computer program product. The computer program product includes one or more computer programs. Loading and executing a computer program on a computer produces, in whole or in part, a process or function in accordance with embodiments of the present application. The computer may be a general-purpose computer, a specialized computer, a computer network, or other programmable device. The computer program may be stored in a computer-readable storage medium or transmitted from one computer-readable storage medium to another computer-readable storage medium, e.g., the computer program may be transmitted from one website site, computer, server, or data center to another website site, computer, server, or data center via wired (e.g., coaxial cable, fiber optics, digital subscriber line, DSL) or wireless (e.g., infrared, wireless, microwave, etc.) means. The computer readable storage medium may be any usable medium to which a computer has access or a data storage device such as a server, data center, etc., that contains one or more usable media integrated.

The available media described may be magnetic media (e.g., floppy disk, hard disk, tape), optical media (e.g., high-density digital video disc (DVD)), or semiconductor media (e.g., solid state disk (SSD)) and the like.

A person skilled in the art may understand that the first, second and other numbers involved in the present application are only described for the convenience of distinction, and are not used to limit the scope of the embodiments of the present application, but also indicate the order of precedence.

The at least one of the present application may also be described as one or more, and the plurality may be two, three, four, or more, without limitation of the present application. In embodiments of the present application, for a type of technical feature, the technical features in the type of technical feature are distinguished by "first", "second", "third", "A", "B", "C" and "D", etc., the technical features described by the "first", "second", "third", "A", "B", "C", and "D", are in no order of priority or size.

The correspondences shown in the tables in the present application can be configured or can be predefined. The values of the information in the tables are merely examples and may be configured to other values, which are not limited by the present application. When configuring the correspondence between the information and each parameter, it is not necessary to configure all the correspondences illustrated in each table. For example, the correspondence illustrated in certain rows in the tables in the present application may also not be configured. As another example, appropriate distortion adjustments may be made based on the above table, e.g., splitting, merging, etc. The names of the parameters shown in the headings in the above tables may also be other names understandable by the communication device, and the values or representations of the parameters thereof may also be other values or representations understandable by the communication device. Each of the above tables may also be implemented with other data structures, for example, an array, queue, container, stack, linear table, pointer, chain table, tree, graph, structure, class, heap, or hash table may be used.

Predefined in the present application may be understood as defined, pre-defined, stored, prestored, pre-negotiated, pre-configured, solidified, or pre-fired.

A person skilled in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the specific application and design constraints of the technical solution. A person skilled in the art may use different methods for each particular application to achieve the described functionality, but such implementations should not be considered outside the scope of the present application.

It is clearly understood by those skilled in the field to which it belongs that, for the convenience and brevity of the description, the specific working processes of the above-described systems, apparatuses, and units can be referred to the corresponding processes in the foregoing embodiments of the method, and will not be repeated herein.

The above-described are merely specific implementations of the present application, but the protection scope of the present application is not limited to this. The conceivable change or alternative by those skilled in the art within the technical scope disclosed by the present application should be covered in the protection scope of the present application. Therefore, the protection scope of the present application is subject to the protection scope of the claims.

**Claims**

1. A method for determining a processing delay, performed by a network-side device, comprising:

   obtaining capability information of a user equipment (UE);
   in a case where the capability information of the UE indicates that the UE is a first type UE, using a first delay as a decoding delay of the UE; and determining the processing delay of the UE according to the first delay.

2. The method according to claim 1, further comprising:

   in a case where the capability information of the UE indicates that the UE is a second type UE, using a second delay as the decoding delay of the UE, wherein the second delay is less than the first delay; and determining the processing delay of the UE according to the second delay.

3. The method according to claim 1, wherein the first delay is obtained by any of following formulas:

$$NT,1\_new=NT,1+delta;$$

or

$$NT,1\_new=m*NT,1,$$

where NT, 1_new is the first delay, NT,1 is the second delay, and delta or m is a preset value.

4. The method according to claim 3, wherein delta or m is specified by a protocol or configured by the network-side device.

5. The method according to claim 1, wherein the first delay is determined by following steps:

    determining a maximum number of hybrid automatic repeat request (HARQ) combining allowed by a current network; and
determining the first delay according to the maximum number of HARQ combining allowed by the current network and the second delay.

6. The method according to claim 1 or 2, wherein determining the processing delay of the UE according to the first delay or the second delay comprises at least one of:

    using a sum of the first delay or the second delay and a first preset value as a minimum interval between receiving of MSG2 and sending of a new MSG1 by the UE;
obtaining a preparation delay of the UE, and using a sum of the first delay or the second delay, the preparation delay, and a second preset value as a minimum time interval between receiving of MSG2 and sending of MSG3 by the UE;
using a sum of the first delay or the second delay and a second preset value as a minimum time interval between receiving of MSG4 and sending of a HARQ-ACK feedback by the UE; or
using a sum of the first delay or the second delay and a first preset value as a minimum between receiving of a physical downlink shared channel (PDSCH) and sending of a HARQ feedback by the UE.

7. The method according to claim 1, wherein obtaining the capability information of the user equipment (UE) comprises at least one of:

    receiving the capability information reported by the UE through a separate initial uplink bandwidth part (UL BWP) or a separate physical random access channel (PRACH) resource;
receiving the capability information reported by the UE through MSG3; or
receiving the capability information reported by the UE through a radio resource control (RRC) signaling.

8. The method according to claim 1, further comprising:
sending reporting capability indication information to the UE, wherein the reporting capability indication information is used to indicate whether the UE needs to report the capability information.

9. The method according to any one of claims 1 to 8, wherein the capability information comprises at least one of:

    processing capability information of the UE;

    a terminal type of the UE;
a bandwidth supported by the UE;
a size of a post-FFT buffer of the UE; or
a HARQ combining capability of the UE.

10. The method according to claim 1, further comprising:
scheduling the first type UE and the second type UE based on the processing delay.

11. The method according to any one of claims 1 to 10, wherein the first type UE is an enhanced reduced capability (eRedCap) UE and the second type UE is a legacy UE.

12. A method for determining a processing delay, performed by a network-side device, comprising:
configuring a first uplink slot resource and a second uplink slot resource for the UE, wherein the second uplink slot resource is later than the first uplink slot resource.

13. A method for determining a processing delay, performed by a UE, comprising:
reporting capability information of the UE to a network-side device.

14. The method according to claim 13, wherein reporting the capability information of the UE to the network-side device comprises at least one of:

    reporting the capability information of the UE to the network-side device through a separate initial UL BWP or a separate PRACH resource;
reporting the capability information of the UE to the network-side device through MSG3; or
reporting the capability information of the UE to the network-side device through an RRC signaling.

15. The method according to claim 13, further comprising:
receiving reporting capability indication information sent by the network-side device, wherein the reporting capability indication information is used to indicate whether the UE needs to report the capability information.

16. The method according to any one of claims 13 to 15, wherein the capability information comprise s at least one of:

    processing capability information of the UE;
a terminal type of the UE;
a bandwidth supported by the UE;
a size of a post-FFT buffer of the UE; or
a HARQ combining capability of the UE.

17. A method for determining a processing delay, performed by a UE, comprising:
performing an uplink transmission based on a first uplink slot resource and a second uplink slot resource configured by a network-side device, wherein the second uplink slot resource is later than the first uplink slot resource.

18. A communication device, configured in a network-side device, comprising:

    an obtaining module configured to obtain capability information of a user equipment (UE);
    a processing module configured to, in a case where the capability information of the UE indicates that the UE is a first type UE, use a first delay as a decoding delay of the UE; and
    a determining module configured to determine a processing delay of the UE according to the first delay.

19. A communication device, configured in a network-side device, comprising:
    a configuring module configured to configure a first uplink slot resource and a second uplink slot resource for the UE, wherein the second uplink slot resource is later than the first uplink slot resource.

20. A communication device, configured in a UE, comprising:
    a reporting module configured to report capability information of the UE to a network-side device.

21. A communication device, configured in a UE, comprising:
    a transmission module configured to perform an uplink transmission based on a first uplink slot resource or a second uplink slot resource configured by a network-side device, wherein the second uplink slot resource is later than the first uplink slot resource.

22. A communication device, comprising a processor and a memory, wherein the memory stores a computer program, and the processor executes the computer program stored in the memory to cause the device to perform the method according to any one of claims 1 to 12, or the processor executes the computer program stored in the memory to cause the device to perform the method according to any one of claims 13 to 17.

23. A communication device, comprising a processor and an interface circuit, wherein:

    the interface circuit is configured to receive code instructions and transmit the code instructions to the processor; and
    the processor is configured to run the code instructions to perform the method according to any one of claims 1 to 12, or configured to run the code instructions to perform the method according to any one of claims 13 to 17.

24. A computer-readable storage medium configured to store instructions that, when the instructions are executed, cause the method according to any one of claims 1 to 12 to be implemented, or when the instructions are executed, cause the method according to any one of claims 13 to **17** to be implemented.

network device 11                    terminal device 12

FIG. 1

| obtaining capability information of a UE | 201 |

| in a case where the capability information of the UE indicates that the UE is a first type UE, using a first delay as a decoding delay of the UE | 202 |

| determining the processing delay of the UE according to the first delay | 203 |

FIG. 2

| in a case where the capability information of the UE indicates that the UE is a first type UE, determining a first delay through a formula, and using the first delay as a decoding delay of the UE | 301 |

FIG. 3

in a case where the capability information of the UE indicates that the UE is a first type UE, determining a maximum number of HARQ combining allowed by a current network — 401

determining the first delay according to the maximum number of HARQ combining allowed by the current network and the second delay, and using the first delay as the decoding delay of the UE — 402

FIG. 4

in a case where the capability information of the UE indicates that the UE is a second type UE, using a second delay as a decoding delay of the UE — 501

determining the processing delay of the UE according to the second delay — 502

FIG. 5

configuring a first uplink slot resource and a second uplink slot resource for the UE — 601

FIG. 6

scheduling the first type UE and the second type UE based on the processing delay — 701

FIG. 7

sending reporting capability indication information to the UE — 801

FIG. 8

reporting capability information of the UE to a network-side device — 901

FIG. 9

receiving reporting capability indication information sent by the network-side device — 1001

FIG. 10

performing an uplink transmission based on a first uplink slot resource and a second uplink slot resource configured by a network-side device — 1101

FIG. 11

1200

communication
device

1201

obtaining module

1202

processing module

1203

determining module

FIG. 12

1300

communication
device

1301

configuring module

FIG. 13

1400

communication
device

1401

reporting module

FIG. 14

1500

communication
device

1501

transmission module

FIG. 15

**1600**

communication
device

1601

processor 1603

computer
program

1602

memory 1604

computer
program

1606

1605

transceiver

receiver

transmitter

interface
circuit

1607

antenna

FIG. 16

1701

processor

1702

interface

1703

memory

FIG. 17

## INTERNATIONAL SEARCH REPORT

| International application No. |
| --- |
| **PCT/CN2022/131562** |

| A. | CLASSIFICATION OF SUBJECT MATTER |
| --- | --- |

H04L5/00(2006.01)i

According to International Patent Classification (IPC) or to both national classification and IPC

| B. | FIELDS SEARCHED |
| --- | --- |

Minimum documentation searched (classification system followed by classification symbols)

IPC:H04L,H04W,H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, 3GPP: 时延, 确定, 时隙, 资源, 解码, 能力, 合并, HARQ, latency, determine, slot, resource, decode, capability, merge

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115004835 A (BEIJING XIAOMI MOBILE SOFTWARE CO., LTD.) 2022-09-02 (2022-09-02)<br>   description, paragraphs [0038]-[0273] | 1-24 |
| X | WO 2022028340 A1 (HUAWEI TECHNOLOGIES CO., LTD.) 2022-02-10 (2022-02-10)<br>   description, page 8, line 25 to page 22, line 37 | 1-24 |
| A | CN 115004617 A (BEIJING XIAOMI MOBILE SOFTWARE CO., LTD.) 2022-09-02 (2022-09-02)<br>   entire document | 1-24 |
| A | WO 2022028361 A1 (HUAWEI TECHNOLOGIES CO., LTD.) 2022-02-10 (2022-02-10)<br>   entire document | 1-24 |
| A | CATT. "Remaining Issues on Paging Transmission for Rel-13 Low Complexity UEs and UEs in Enhanced Coverage"<br>*3GPP R1-155177*, 2015-09-25 (2015-09-25),<br>   entire document | 1-24 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 April 2023** | **18 April 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/131562**

| Box No. III | Observations where unity of invention is lacking (Continuation of item 3 of first sheet) |

This International Searching Authority found multiple inventions in this international application, as follows:

The first group: independent claims 1, 13, 18, 20 and 22-24 (when referring to one of claims 1-11 and 13-16) all relate to a network side device acquiring capability information of a UE, wherein the capability information of the UE indicates that the UE is a first type of UE, and a first delay is used as a decoding delay of the UE; and determining a processing delay of the UE according to the first delay.

The second group: independent claims 12, 17, 19, 21 and 22-24 (when referring to one of claims 12 and 17) all relate to configuring a first uplink time slot resource and a second uplink time slot resource for a UE, wherein the second uplink time slot resource is later than the first uplink time slot resource.

The same or corresponding feature between the two groups of independent claims is "processing delay". However, for a person skilled in the art, processing delay itself is common general knowledge. Therefore, the two groups of independent claims do not have a same or corresponding special technical feature, do not meet the requirement of unity of invention, and do not comply with PCT Rule 13.1.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet) (July 2022)

**INTERNATIONAL SEARCH REPORT**
**Information on patent family members**

International application No.

**PCT/CN2022/131562**

| Patent document cited in search report | | | Publication date (day/month/year) | Patent family member(s) | | | Publication date (day/month/year) |
|---|---|---|---|---|---|---|---|
| CN | 115004835 | A | 02 September 2022 | None | | | |
| WO | 2022028340 | A1 | 10 February 2022 | BR | 112023002181 | A2 | 14 March 2023 |
| | | | | CN | 114071750 | A | 18 February 2022 |
| CN | 115004617 | A | 02 September 2022 | None | | | |
| WO | 2022028361 | A1 | 10 February 2022 | CN | 114071745 | A | 18 February 2022 |

Form PCT/ISA/210 (patent family annex) (July 2022)